# EUROPÄISCHE PATENTSCHRIFT

(11) **EP 0 712 299 B1**
(45) Veröffentlichungstag und Bekanntmachung des Hinweises auf die Patenterteilung: **11.06.1997**
(21) Anmeldenummer: 94925400.7
(22) Anmeldetag: 27.07.1994
(51) Int. Cl.: A61C 19/00, A61C 3/08

(54) **ZAHNÄRZTLICHES STOPFERINSTRUMENT**
DENTAL PLUGGER
FOULOIR DENTAIRE

(30) Priorität: 06.08.1993 DE 9311733 U; 28.06.1994 DE 4422570
(43) Veröffentlichungstag der Anmeldung: 22.05.1996
(73) Patentinhaber: Stegemann, Wolfgang, D-49076 Osnabrück (DE); Oehler, Klaus, 49090 Osnabrück (DE)
(72) Erfinder: Stegemann, Wolfgang, D-49076 Osnabrück (DE); Oehler, Klaus, 49090 Osnabrück (DE)
(74) Vertreter: Pott, Ulrich
(86) Internationale Anmeldenummer: EP9402476
(87) Internationale Veröffentlichungsnummer: WO9504505

(56) Entgegenhaltungen:
- EP-A- 0 125 558
- EP-A- 0 169 803
- EP-A- 0 240 007
- US-A- 4 673 353
- US-A- 5 098 292

## Beschreibung

Die Erfindung betrifft ein zahnärztliches Instrument nach dem Oberbegriff des Anspruchs 1.

Die Verwendung von fotopolymerisierbaren Kunststoffen ist in der Zahnheilkunde bekannt und wird zunehmend eingesetzt, beispielsweise auch aufgrund der Zunahme von Allergien gegenüber herkömmlichen metallischen Füllungen wie z.B. Amalgam. Hierbei wird hierkömmlicherweise die Kunststoffüllung zunächst im Zahn mit konventionellen Instrumenten gestopft und dann mittels einer Lichtquelle ausgehärtet.

Aus der DE 41 33 109 C1 ist ein zahnärztliches Handgerät mit einem lichtdurchlässigen Modellierstück bekannt, auf das nach dem Modellieren eine Lichtquelle zum Aushärten der Kunststoffüllung aufgesetzt werden kann. Bei diesem Gerät sind jedoch für den Aushärtevorgang zwei Hände des behandelnden oder aber einer Assistenz oder Hilfsperson erforderlich, die in vielen Fällen jedoch nicht exakt visuell wahrnehmen kann, wo genau die Lichtquelle zu plazieren ist. Eine Behandlung mit zwei Händen durch die behandelnde Person ist nur schwerlich exakt durchzuführen. Zudem hat dieses Gerät einen großen Raumbedarf, so daß eine Behandlung im hinteren Mundraum und an sonstigen schwer zugänglichen Stellen nahezu unmöglich ist. Außerdem ist auch an leichter zugänglichen Stellen die Behandlung für den Patienten unangenehm. Darüber hinaus kann das Licht nicht konzentriert auf das auszuhärtende Füllungsmaterial gebracht werden; vielmehr kann das Licht über das Mundstück auch außerhalb der Mundstückspitze austreten, was zu Verlusten führt.

Desweiteren ist aus der US-A-4,673,353 ein zahnärztliches Instrument bekannt, das zum Einbringen von Füllungsmaterial in die Zahnkavität und zum gleichzeitigen Aushärten des Materials dient. Das Gerät besteht im wesentlichen aus einer Hülse und einem bewegbaren Kolben, der lichtleitend ausgebildet ist und mit einer Lichtquelle in Verbindung steht. Der Kolben ist innerhalb der Hülse beweglich geführt und kann das in die Hülse eingebrachte Füllungsmaterial wieder herauspressen.

Aus der US-A-5,098,292 ist ein zahnärztliches Instrument bekannt, das aus einem lichtdurchlässigen Modellierstück besteht, das an einem gleichfalls lichtdurchlässig ausgebildeten Griffstiel festlegbar ist. Das Instrument dient zum Einbringen und Modellieren einer Zahnfülllung mit anschließender Aushärtung.

Aus der EP-A-0 240 007 ist schließlich ein dentales Bestrahlungsgerät zur Aushärtung photopolymerisierbarer Zahnfüllungen insito bekannt, das einen im wesentlichen durchgehend konisch ausgebildeten Lichtleiter hat. Dieser Lichtleiter weist eine ballige Austrittsfläche auf, der ein gekrümmter Bereich mit konstantem Durchmesser und unmittelbar vor der Austrittsfläche ein Bereich mit stärkerem Konuswinkel vorgeordnet ist. Damit soll aufgrund der damit verbundenen vergrößerten Strahlungsdivergenz an der Austrittsfläche eine weitgehend halbkugelförmige Abstrahlung von etwa konstanter Strahlungsdichte ermöglicht sein.

Aufgabe der Erfindung ist es somit, ein zahnärztliches Instrument der eingangs genannten Art zur Verfügung zu stellen, mit dem in leicht handhabbarer Weise sowie Präzise und problemlos bedienbar eine Zahnkavität mit lichthärtenden Stoffen gefüllt und anschließend dieses Füllmaterial lichtausgehärtet werden kann.

Zur Lösung dieser Aufgabe zeichnet sich das zahnärztliche Instrument durch die im Anspruch 1 angegebenen Merkmale aus. In den Ansprüchen 2 bis 13 sind vorteilhafte wesentliche Ausgestaltungen der Erfindung angegeben.

Durch die Ausbildung des Modellierstücks als Stopferstück ist die Voraussetzung geschaffen, mit dem lichtdurchlässigen Modellierstück eine Zahnkavität zu stopfen und unmittelbar nach den Stopferarbeiten auszuhärten, und zwar ohne das Instrument absetzen zu müssen. So ist beispielsweise nur ein Hand- oder Fußschalter zu betätigen, um die Lichtquelle zu aktivieren, um den Aushärtungsvorgang einzuleiten. Durch das stirnendseitige Lichtaustrittsfenster der Umhüllung kann das durch den Griffstiel und das Modellierstück geleitete Licht gezielt eingeleitet werden, wobei durch die Umhüllung ein Austreten von Streulicht nahezu ausgeschlossen ist. Durch die konvexe Wölbung der Endfläche des in das Lichtaustrittsfenster eingesetzten Linseneinsatzes ist zunächst eine Fokussierung des Lichtes ermöglicht.

Durch das zahnärztliche Instrument nach der Erfindung ist die sofortige Polymerisation unmittelbar nach dem Stopfervorgang mit sicherer unmittelbarer Einleitung des Lichtes in die Behandlungsstelle ermöglicht. Ein Wechsel des im Mund des Patienten vom Behandler und ggf. Helferin benutzten Instrumentariums ist nicht notwendig, was örtliche und zeitliche Sicherheit für den Polymerisationsvorgang bezüglich Start, Richtung und Tiefe der Reaktion mit sich bringt.

Ebenfalls ist ein Schattenwurf durch vorspringende Kavitätenkanten als Unsicherheitsfaktor für die Polymerisation nahezu ausgeschaltet, da der Behandler selbst das Licht in dem von ihm unmittelbar vorher gestopften Bereich wirksam werden läßt. Darüber hinaus muß der behandelnde Zahnarzt keine Änderung seiner Arbeitshaltung vornehmen. Eine Korrektur der Lichtrichtung entfällt damit ebenfalls.

Das Instrument nach der Erfindung ermöglicht zudem infolge des sofortigen Polymerisationsstartes nach Plazieren des Füllungsmaterials dieses genau an dem ihm zugewiesenen Platz zu halten. Da die Füllungskunststoffe entsprechend ihrer Viskosität vor Erreichen der Endhärte Plastisch verformbar sind, ist das Risiko der Verformung durch von außen einwirkende, entgegengesetzte Kräfte nach der Erfindung ausgeschlossen.

Der direkte Kontakt mit dem Füllungsmaterial während der Lichteinleitung - was in der Regel unter Druck erfolgt - hat darüber hinaus den Vorteil, daß das Licht ohne Distanz zum Füllungswerkstoff auf diesen einwirken kann. Darüber hinaus ist die Polymerisationsschrumpfung aufgrund des Aushärtevorganges unter Druck deutlich verringert, so daß auch das Risiko verringert ist, daß der Kontakt der Füllung mit den Kavitätenwänden beeinträchtigt wird bzw. abreißt. Der innige Kontakt mit dem Füllungsmaterial bringt darüber hinaus den weiteren Vorteil, daß die Durchdringung des Füllungsmaterials mit den zur Aktivierung der Polymerisation notwendigen Lichtstrahlen größer und die Gefahr des Bestehenbleibens von Restmonomeren verringert ist, wodurch das Risiko der Pulpenbeschädigung ebenfalls verringert und die Polymerisationstiefe von wenigstens 2 mm sicher eingehalten werden kann.

Da bei dem Instrument nach der Erfindung das Licht ausschließlich auf die auszuhärtende Füllung gelangt und nicht anderweitig abstrahlt, ist auch vollständig die Gefahr ausgeschlossen, daß das Licht außerhalb der Mundhöhle abstrahlt mit z.B. der Gefahr von Schädigungen der Netzhaut vom Behandler, Patienten und Assistenten.

Bevorzugterweise kann die Umhüllung des Stopferteils aus Edelstahl bestehen.

Im Verlaufe der Lichtleitstrecke kann in dem Fall, in dem der Lichtstrahl vom Durchmesser bzw. der Breite her zu verkleinern ist, ein Lichtleitkegelstück oder dgl. aus z.B. miteinander verschmolzenen Kernmantelstäben Einsatz finden.

Stopferstück und Griffstiel können einstückig als Handgriffteil ausgebildet sein, so daß keine zusätzlichen optischen Kupplungsstücke erforderlich sind. Eine andere Ausführungsvariante sieht vor, den Griffstiel und das Stopferteil zwei- oder mehrteilig auszubilden, wobei das Modellierstück lichtleitend mit dem Griffstiel verbindbar ist. Damit ist die Möglichkeit geschaffen, z.B. vom Krümmungsradius und/oder Durchmesser sich unterscheidende Stopferstücke an dem Griffstiel anzubringen, um unterschiedlichen Modellier- bzw. Füllungsanforderungen gerecht zu werden. Außerdem sind die einzelnen Stopferstücke einfacher zu desinfizieren bzw. zu sterilisieren.

Das Handstück kann auch aus Glas bzw. Plexiglas und zum Schutz gegenüber Beschädigungen mit einer Kunststoffumhüllung versehen sein. Glasmaterialien sowie Plexiglas besitzen die erforderlich lichtleitenden Eigenschaften und sind in den erforderlichen Gestaltungen herstellbar. Durch die Wahl spezieller Glas- oder anderer optischer Kunststoffasern kann erreicht werden, daß das Licht mit nur geringen Dämpfungsverlusten durch das Handstück zur Stopferstückspitze hin geführt wird. Im allgemeinen sind die Dämpfungsverluste bei einem Vollmaterial wie Plexiglas höher als bei einem Passend zur angekoppelten Wellenlänge bzw. zu dem eingekoppelten Wellenlängenbereich ausgewählten Fasertyp.

Bevorzugterweise sind die Lichtleiter über flexible optische Fasern mit einer Kaltlichtquelle verbunden. Die Auswahl der flexiblen optischen Fasern erfolgt nach den Kriterien der Wellenlänge des einzuleitenden Lichtes, dem gewünschten Biegeradius sowie den tolerierbaren Dämpfungsverlusten bei einer vorgegebenen Länge des Lichtleiters, die vorteilhafterweise so ausgelegt ist, daß das Handstück optimal gehandhabt werden kann. Die flexiblen optischen Fasern werden über Kupplungselemente an die Lichtleiter des Handstücks angekoppelt, wobei diese zweckmäßigerweise so gestaltet sind, daß die Ankopplungsverluste der Lichtleistung minimal sind.

Zweckmäßigerweise weist das Instrument einen Regler mit ggf. einstellbarem Zeitschalter auf, so daß der Behandler die Strahlleistung variieren kann, wodurch die jeweils erforderliche Polymerisationsstufe oder die gewünschte Härte des Kunststoffes optimal eingestellt werden kann.

Als Lichtquelle ist bevorzugtermaßen eine Halogenlampe vorgesehen, die Wellenlängen im ultravioletten und sichtbaren Bereich emittiert. Derartige Halogenlampen sind relativ preiswert und in ihren räumlichen Ausmaßen nicht sehr groß. Zweckmäßigerweise ist die Halogenlampe mit einem Fußschalter betätigbar, so daß der Zahnarzt die Hände frei zum Stopfen der Zahnfüllung hat. Zur Vermeidung von Gewebeschädigungen durch das Licht mit Wellenlängen von < 320 nm, kann zwischen der Halogenlampe und den flexiblen optischen Fasern ein Filter angeordnet werden, der Wellenlängen < 320 nm absorbiert oder reflektiert.

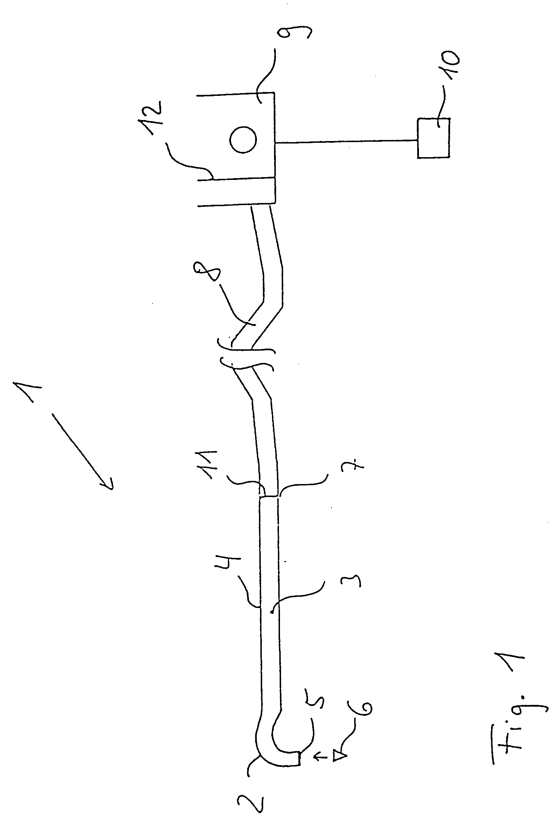

Ein Ausführungsbeispiel des Gegenstands der Erfindung ist nachstehend anhand der Zeichnung erläutert. Die Zeichnung zeigt:
eine schematische Darstellung eines Aufführungsbeispiels der Bauteile eines zahnärztlichen Stopferinstrumentes nach der Erfindung.

Das in der Zeichnung allgemein mit 1 bezeichnete zahnärztliche Instrument besteht aus einem Stopferstück 2 und einem Griffstiel 3, die zusammen ein Handstück 4 ausbilden. Eine andere Ausführungsvariante - hier nicht gezeigt - sieht vor, daß das Stopferstück 2 und der Griffstiel 3 separat ausgebildet sind und über Verbindungselemente oder dergleichen lichtleitend verbindbar sind. Das Stopferstück 2 weist eine Krümmung auf, während der Griffstiel 3 geradlinig ausgebildet ist. Das Handstück 4 ist insgesamt lichtleitend ausgebildet und von einer Umhüllung mit einem stirnendseitigen Lichtaustrittsfenster 5 umgeben. Die Umhüllung soll in dem veranschaulichten Ausführungsbeispiel ein Edelstahlrohr sein, in dem Lichtleitfasern angeordnet sind, die in einem Linsenaufsatz 6 münden, der aus dem stirnendseitigen Lichtaustrittsfenster 5 herausragt und endseitig konvex gewölbt ist. Dieser Linseneinsatz 6 bildet die Spitze des Stopferstücks 2.

An das dem Stopferstück 2 abgewandten Ende des Griffstiels 3 schließt sich ein Kupplungselement 7 an, durch das flexible optische Fasern 8 mit dem Handstück 4 verbunden werden. Diese flexiblen Glasfasern 8 stellen die Verbindung zwischen dem Handstück 4 und einer Halogenlampe 9 dar, die das zur Aushärtung des Füllmaterials erforderliche Licht aussendet. Die Länge der flexiblen Glasfasern 8 liegt bevorzugterweise im Bereich von 1,5 m, so daß die Halogenlampe 9 an einem sicheren Platz außerhalb der Reichweite des Bewegungsfeldes des Zahnartzes aufgestellt werden kann. Die Halogenlampe 9 ist mit einem Fußschalter 10 zu betätigen. Zur Einstellung der Lichtleistung ist zweckmäßigerweise am Kupplungselement 7 ein Abschwächer 11 angebracht. Außerdem ist zweckmäßigerweise zwischen den flexiblen Glasfasern und der Halogenlampe 9 ein UV-Filter 12 angeordnet, der Licht mit Wellenlängen < 320 nm absorbiert oder reflektiert.

## Patentansprüche

1. Zahnärztliches Instrument mit einem Anschlußelement zur Verbindung mit einer Lichtquelle aufweisenden lichtleitenden Griffstiel sowie einem an diesem festlegbaren lichtdurchlässigen Modellierstück zum Aushärten von lichthärtbaren Zahnfüllungsmassen, welches als ein eine Umhüllung mit einem stirnendseitigen Lichtaustrittsfenster (5) umfassendes Stopferstück (2) ausgebildet ist, dadurch gekennzeichnet, daß das Lichtaustrittsfenster (5) einen endseitig konvex gewölbten Linseneinsatz zur Fokussierung des Lichtes und zum Stopfen der Zahnfüllung aufweist.

2. Zahnärztliches Instrument nach Anspruch 1, **dadurch gekennzeichnet,** daß das Stopferstück (2) und der Griffstiel (3) einteilig ausgebildet sind.

3. Zahnärztliches Instrument nach Anspruch 1 oder 2, **dadurch gekennzeichnet,** daß der Linseneinsatz (6) eine polierte Oberfläche hat.

4. Zahnärztliches Instrument nach einem der Ansprüche 1 bis 3, **dadurch gekennzeichnet,** daß das Stopferstück (2) und/oder der Griffstiel (3) aus ummanteltem Glas- bzw. Plexiglasmaterial besteht.

5. Zahnärztliches Instrument nach einem der Ansprüche 1 bis 3, **dadurch gekennzeichnet,** daß das Stopferteil (2) und/oder der Griffstiel (3) von der Umhüllung umgrenzte Glasfasern aufweist.

6. Zahnärztliches Instrument nach einem der Ansprüche 1 bis 5, **dadurch gekennzeichnet,** daß die Umhüllung aus einem Kunststoff- oder Edelstahlmaterial besteht.

7. Zahnärztliches Instrument nach einem der Ansprüche 1 bis 6, **dadurch gekennzeichnet,** daß am Griffstiel (3) Kupplungsselemente (7) angeordnet sind, über die die Lichtleiter über flexible optische Fasern (8) mit der Lichtquelle (9) verbindbar sind.

8. Zahnärztliches Instrument nach einem der Ansprüche 1 bis 7, **dadurch gekennzeichnet,** daß ein Regler (11) zur Einstellung der Lichtstrahlleistung vorgesehen ist.

9. Zahnärztliches Instrument nach einem der Ansprüche 1 bis 8, **dadurch gekennzeichnet,** daß als Lichtquelle (9) eine Halogenlampe mit Wellenlängen im ultravioletten und sichtbaren Bereich vorgesehen ist.

10. Zahnärztliches Instrument nach Anspruch 9, **dadurch gekennzeichnet,** daß die Halogenlampe (9) mit einem Fuß oder Handschalter (10) betätigbar ist.

11. Zahnärztliches Instrument nach einem der Ansprüche 1 bis 10, **dadurch gekennzeichnet,** daß zwischen der Halogenlampe (9) und der Lichtleitstrecke ein UV-Filter (12) angeordnet ist, der Wellenlängen < 320 nm absorbiert oder reflektiert.

12. Zahnärztliches Instrument nach einem der Ansprüche 1 bis 11, **dadurch gekennzeichnet,** daß auf der Lichtleitübertragungsstrecke im Griffstiel (3) und/oder im Stopferstück (2) ein oder mehrere Lichtleitelemente zur Verjüngung des Lichtstrahls vorgesehen sind.

13. Zahnärztliches Instrument nach Anspruch 12, **dadurch gekennzeichnet,** daß das Lichtleitelement als Lichtleitkegelstück ausgebildet ist.

## Claims

1. A dental instrument with a connecting element for connection to a light-conducting handle comprising a light source and, adapted to be fixed on the said handle, a light transmissive modelling piece for hardening light-hardenable tooth filling compositions and which is constructed as a tamping piece (2) comprising a casing with a light outlet window (5) at the end, characterised in that the light outlet window (5) comprises at the end a convexly curved lens insert for focusing the light and for tamping the tooth filling.

2. A dental instrument according to claim 1, characterised in that the tampering piece (2) and the handle (3) are constructed in one piece.

3. A dental instrument according to claim 1 or 2, characterised in that the lens insert (6) has a profiled surface.

4. A dental instrument according to one of claims 1 to 3, characterised in that the tampering piece (2) and/or the handle (3) consists of sheathed glass or plexiglass material.

5. A dental instrument according to one of claims 1 to 3, characterised in that the tampering piece (2) and/or the handle (3) comprises glass fibres which are bounded by the sheathing.

6. A dental instrument according to one of claims 1 to 5, characterised in that the sheathing consists of a synthetic plastics or stainless steel material.

7. A dental instrument according to one of claims 1 to 6, characterised in that the are on the handle (3) coupling elements (7) by which the tight conductors can be connected to the light source (9) via flexible optical fibres (8).

8. A dental instrument according to one of claims 1 to 7, characterised in that a regulator (11) is provided for adjusting the output from the light beam.

9. A dental instrument according to one of claims 1 to 8, characterised in that a halogen lamp with wavelengths in the ultra-violet and visible range is provided as the light source (9).

10. A dental instrument according to claim 9, characterised in that the halogen lamp (9) can be actuated by a foot or hand switch (10).

11. A dental instrument according to one of claims 1 to 10, characterised in that the is between the halogen lamp (9) and the light guide path an ultra-violet filter (12) which absorbs or reflects wavelengths below 320 nm.

12. A dental instrument according to one of claims 1 to 11, characterised in that on the light conducting and transmitting section in the handle (3) and/or in the tampering piece (2) there are one or a plurality of light guiding elements for tapering the light beam.

13. A dental instrument according to claim 12, characterised in that the light guiding element is conducting as a conical light guiding member.

## Revendications

1. Instrument dentaire comprenant un élément de connexion destiné à le relier à un manche conduisant la lumière et présentant une source lumineuse, ainsi qu'une partie de modelage transparente pouvant être fixée à ce manche et destinée au durcissement de masses de matériau d'obturation durcissables à la lumière, cette partie étant conçue comme une partie formant fouloir (2) composée d'une gaine pourvue d'une fenêtre de sortie de lumière (5) à son côté d'about, caractérisé en ce que la fenêtre de sortie de lumière (5) présente une lentille rapportée à courbure d'extrémité convexe et destinée à focaliser la lumière et à tasser le matériau d'obturation dentaire.

2. Instrument dentaire suivant la revendication 1, caractérisé en ce que la partie formant fouloir (2) et le manche (3) sont venus d'une seule pièce.

3. Instrument dentaire suivant la revendication 1 ou 2, caractérisé en ce que la lentille rapportée (6) a une surface polie.

4. Instrument dentaire suivant l'une quelconque des revendications 1 à 3, caractérisé en ce que la partie formant fouloir (2) et/ou le manche (3) sont faits en verre ou plexiglas enrobé.

5. Instrument dentaire suivant l'une quelconque des revendications 1 à 3, caractérisé en ce que la partie formant fouloir (2) et/ou le manche (3) présentent des fibres de verre enveloppées par la gaine.

6. Instrument dentaire suivant l'une quelconque des revendications 1 à 5, caractérisé en ce que la gaine est faite en une matière plastique ou en un acier spécial.

7. Instrument dentaire suivant l'une quelconque des revendications 1 à 6, caractérisé en ce que sur le manche (3) sont appliqués des éléments de connexion (7) par lesquels les guides de lumière peuvent être reliés à la source lumineuse (9) par l'intermédiaire de fibres optiques flexibles (8).

8. Instrument dentaire suivant l'une quelconque des revendications 1 à 7, caractérisé en ce qu'un gradateur (11) est prévu pour régler l'intensité du rayonnement lumineux.

9. Instrument dentaire suivant l'une quelconque des revendications 1 à 8, caractérisé en ce qu'une lampe halogène dont les longueurs d'onde sont comprises dans l'ultraviolet et le visible est prévue comme source lumineuse (9).

10. Instrument dentaire suivant la revendication 9, caractérisé en ce que la lampe halogène (9) peut être commandée par un commutateur au pied ou à main (10).

11. Instrument dentaire suivant l'une quelconque des revendications 1 à 10, caractérisé en ce qu'entre la lampe halogène (9) et le trajet de transmission de la lumière est disposé un filtre ultraviolet (12) qui absorbe ou réfléchit des longueurs d'onde inférieures à 320 nm.

12. Instrument dentaire suivant l'une quelconque des revendications 1 à 11, caractérisé en ce que sur le trajet de transmission de la lumière dans le manche (3) et/ou dans la partie formant fouloir (2) sont prévus un ou plusieurs éléments servant de guides de lumière et destinés à rétrécir le rayon lumineux.

13. Instrument dentaire suivant la revendication 12, caractérisé en ce que l'élément servant de guide de lumière se présente sous la forme d'un cône.
